## Europäisches Patentamt

## European Patent Office

## Office européen des brevets

(19)

(11) Veröffentlichungsnummer: **0 218 836**
**B1**

(12) **EUROPÄISCHE PATENTSCHRIFT**

(45) Veröffentlichungstag der Patentschrift:
26.07.89

(51) Int. Cl.⁴: **B 23 B 17/00**

(21) Anmeldenummer: **86111041.9**

(22) Anmeldetag: **09.08.86**

(54) Schlittenführungssystem.

(30) Priorität: **06.09.85 DE 3531813**

(43) Veröffentlichungstag der Anmeldung:
**22.04.87 Patentblatt 87/17**

(45) Bekanntmachung des Hinweises auf die Patenterteilung:
**26.07.89 Patentblatt 89/30**

(84) Benannte Vertragsstaaten:
**AT BE CH DE FR GB IT LI LU NL SE**

(56) Entgegenhaltungen:
**DD-A- 57 768**
**DE-A- 3 132 869**
**US-A- 3 523 851**
**US-A- 4 545 271**

**Manfred Weck: Werkzeugmaschinen, Band 2, 1981**

(73) Patentinhaber: **Gebrüder Honsberg GmbH, Hastener Strasse 22-26, D-5630 Remscheid-Hasten (DE)**

(72) Erfinder: **Kölblin, Rolf, Kientalstrasse 44, D-8036 Herrsching (DE)**
Erfinder: **Schneider, Reinhard, Kortemicker Strasse 16, D-5275 Bergneustadt 2 (DE)**
Erfinder: **Burgtorf, Heinrich, Hackenberg 63a, D-5630 Remscheide 11 (DE)**

(74) Vertreter: **Selting, Günther, Dipl.-Ing. et al, Deichmannhaus am Hauptbahnhof, D-5000 Köln 1 (DE)**

ACTORUM AG

# Beschreibung

Die Erfindung betrifft ein Schlittenführungssystem mit einem Grundkörper, der parallele Führungsleisten trägt, und einem auf den Führungsleisten verschiebbaren Schlitten mit je einer Aufnahme für jede Führungsleiste, wobei mindestens eine Seitenfläche der Aufnahme mit Kunststoff beschichtet ist.

Derartige Schlittenführungssysteme werden beispielsweise für Werkzeugmaschinen benutzt, bei denen der Schlitten mit hoher Genauigkeit entlang einer Achse der Werkzeugmaschine geführt werden muß. Voraussetzung für eine exakte Führung ist ein steifes Führungssystem und eine enge Passung zwischen jeder der Führungsleisten und der zugehörigen Aufnahme. Es ist bekannt, in einem Führungssystem eine Führungsleiste flach auszubilden und die andere mit dreieckförmigem Querschnitt zu versehen, so daß der Schlitten bei thermischen Ausdehnungen oder Fehlanpassungen seitlich nach oben ausweichen kann. Hierbei wird zwar vermieden, daß bei ungleichmäßigen thermischen Ausdehnungen der Komponenten des Systems oder bei anderweitigen Maßdifferenzen Klemmungen des Systems auftreten, jedoch wird die Genauigkeit der Linearführung verschlechtert, weil Querbewegungen zur Führungsrichtung auftreten.

Zur Erzielung der engen Passung zwischen Aufnahme und Führungsleiste ist es bekannt, die Aufnahme zunächst mit einem Übermaß herzustellen und die Führungsleiste in die Aufnahme einzusetzen. Der verbleibende Hohlraum in der Aufnahme wird anschließend mit Kunststoff ausgespritzt, wobei die Oberfläche der Führungsleiste mit einem Haftverhinderer beschichtet ist. Auf diese Weise werden eine oder mehrere Wände der Aufnahme mit Kunststoff beschichtet, wobei der Querschnitt der Aufnahme exakt an den Querschnitt der Führungsleiste angepaßt wird. Es ist auch bekannt, an der Aufnahme justierbare Andrückvorrichtungen vorzusehen, um die Führungsleiste definiert gegen die der Andrückvorrichtung gegenüberliegende Fläche der Aufnahme zu drücken.

Ein Schlittenführungssystem, von dem der Oberbegriff des Patentanspruchs 1 ausgeht, ist in DD-A-57 768 beschrieben. Bei diesem Schlittenführungssystem sind die Flächen der rechteckigen Aufnahme, welche die Führungsleiste umschließt, mit mehrschichtigen Gleitplatten versehen. Die Gleitplatten liegen auf einer plastischen Klebe- und Fügeschicht auf und sie passen sich während des Aushärtens des Kunststoffs der Oberfläche der Führungsleiste an. Beim Abheben des Schlittens von den Führungsleisten besteht die Gefahr der Beschädigung der Kunststoff-Gleitbeschichtungen.

Bei den bekannten Schlittenführungssystemen, bei denen mindestens eine der Flächen der Aufnahme mit Kunststoff beschichtet ist, tritt das Problem auf, daß die Beschichtung beim Herausnehmen der Führungsleiste beschädigt werden kann. Solche Beschädigungen der Beschichtung haben zur Folge, daß die Führungsgenauigkeit leidet.

Der Erfindung liegt die Aufgabe zugrunde, ein Schlittenführungssystem der eingangs genannten Art zu schaffen, bei dem eine exakte Anpassung der Form der Aufnahme an diejenige der Führungsleiste sichergestellt ist, um Führungsabweichungen in jeder Richtung, die nicht mit der Führungsrichtung übereinstimmt, zu vermeiden.

Die Lösung dieser Aufgabe erfolgt erfindungsgemäß mit den im kennzeichnenden Teil des Patentanspruchs 1 angegebenen Merkmalen.

Durch die schräge Außenfläche der Beschichtung und die schräge Seitenfläche der Führungsleiste wird erreicht, daß der Schlitten nach dem Erzeugen der Beschichtung auf einfache Weise von der Führungsleiste abgenommen werden kann, ohne die Kunststoffschicht zu beschädigen oder zu verformen. Die Keilschräge dient also zur Erleichterung des Entformens der Kunststoffbeschichtung, die in situ hergestellt wird. Andererseits wirkt sich die Keilschräge beim Betrieb des Schlittenführungssystems nicht nachteilig aus, weil der Keilwinkel so klein ist, daß er gegen seitliche Kräfte selbsthemmend wirkt. Es besteht daher nicht die Gefahr, daß der Schlitten infolge seitlicher Kräfte von den Führungsleisten abhebt. Die Erfindung ermöglicht auch eine einfache Montage des Schlittens auf den Führungsleisten, wobei diese durch die Abschrägung zentrierend wirken, wenn z.B. der Schlitten von einem Kran auf den Grundkörper abgesenkt wird.

Das Abnehmen des Schlittens von den Führungsleisten nach Herstellung der Beschichtung ist erforderlich, um an der Außenfläche der Beschichtung eine Nachbearbeitung vornehmen zu können. Da durch das Ausspritzen die Außenfläche der Beschichtung mit hoher Genauigkeit an die Außenfläche der Führungsleiste angepaßt wird, würde ohne eine solche Nachbearbeitung kein Zwischenraum für die Bildung eines Schmiermittelfilms zur Verfügung stehen. Aus diesem Grund werden in die Außenfläche der Beschichtung Schmiermittelnuten oder andere Ausnehmungen eingearbeitet.

Der Winkel der Keilschräge hängt von den Gleiteigenschaften der zusammenwirkenden Materialien unter Berücksichtigung der Wirkung des Schmiermittels ab. Dieser Winkel ist kleiner als 10° und insbesondere kleiner als 5°. Ein Keilwinkel in der Größenordnung von etwa 3 bis 4° reicht aus, um eine einwandfreie Entformung der Beschichtung durch Herausnehmen der Führungsleiste vornehmen zu können.

Ein Schlittenführungssystem, bei dem zwei parallele Führungsleisten in der erfindungsgemäßen Weise mit enger Passung geführt sind, stellt ein statisch überbestimmtes System dar. Damit in einem solchen System keine Klemmungen auftreten, muß dafür gesorgt werden, daß am Grundkörper oder vorzugsweise am Schlitten elastische Verformungen auftreten können, mit denen die entsprechende Komponente auftretende Klemmkräfte abfangen kann. Bei den bekannten Schlittenführungssystemen übernimmt jeweils nur eine der Führungsleisten die Funktion der exakten Führung, während an der anderen Führungsleiste für das notwendige Spiel zur Anpassung gesorgt wird. Das erfindungsgemäße Schlittenführungssystem erlaubt es, an beiden Führungsleisten extrem enge Toleranzen vorzusehen und eine praktisch spielfreie Führung durchzuführen. Das Schlittenführungssystem eignet sich für die Führung entlang aller Achsen (X, Y, Z-Achse) einer Werkzeugmaschine. Der Grundkörper muß nicht notwendigerweise ortsfest sein, sondern er kann seinerseits aus einem Schlitten bestehen, der entlang eines anderen Grundkörpers geführt ist.

Vorteilhafte Ausgestaltungen und Weiterbildungen der Erfindung sind den Unteransprüchen zu entnehmen.

Im folgenden wird unter Bezugnahme auf die Zeichnungen ein Ausführungsbeispiel der Erfindung näher erläutert.

Es zeigen:

Fig. 1 eine schematische Stirnansicht des Schlittenführungssystems, und

Fig. 2 in vergrößertem Maßstab einen Querschnitt des Bereichs einer Führungsleiste.

In der Zeichnung ist ein Grundkörper 10 dargestellt, auf dem ein Schlitten 11 in Längsrichtung verfahrbar ist. Der Grundkörper 10 weist an seiner Oberseite zwei parallele Führungsleisten 12 von über ihre Länge konstantem im wesentlichen rechteckigem Querschnitt auf. Die Führungsleisten 12 sind in diesem Beispiel horizontal angeordnet, d.h. ihre Erstreckung in horizontaler Richtung ist größer als ihre vertikale Erstreckung. Jede der Führungsleisten 12 ist auf einem Sockel 13 befestigt, der von dem Grundkörper 10 nach oben aufragt und jede Führungsleiste 12 steht in Richtung auf die gegenüberliegende Führungsleiste über den Sockel 13 hinaus vor. An dem vorstehenden Teil der Unterseite greift eine an dem Schlitten 11 befestigte justierbare Andrückvorrichtung 14 an. Eine weitere justierbare Andrückvorrichtung 15 des Schlittens 11 drückt von der Außenseite des Schlittens her gegen die nach außen gerichtete Seitenfläche der Führungsleiste 12.

Jede der justierbaren Andrückvorrichtungen 14 und 15 besteht bei dem vorliegenden Ausführungsbeispiel aus einem Körper 16, in dem Rollen 17 so geführt sind, daß diese Rollen gegen die Außenseite der Führungsleiste 12 drücken. Die Rollen 17, die im Körper 16 wandern, werden entlang einer Rücklaufbahn 18 zurückgeführt, um anschließend wieder an der Außenfläche der Führungsleiste 12 abzurollen. Der Körper 16 wird von einer Keilvorrichtung 19 aus zwei relativ zueinander verstellbaren Keilen gegen die Außenseite der Führungsleiste 12 gedrückt.

Während die verstellbare Andrückvorrichtung 14 auf einen Teil der Unterseite der Führungsleiste 12 einwirkt, wirkt die verstellbare Andrückvorrichtung 15 auf die nach außen gerichtete Seitenfläche der Führungsleiste 12 ein.

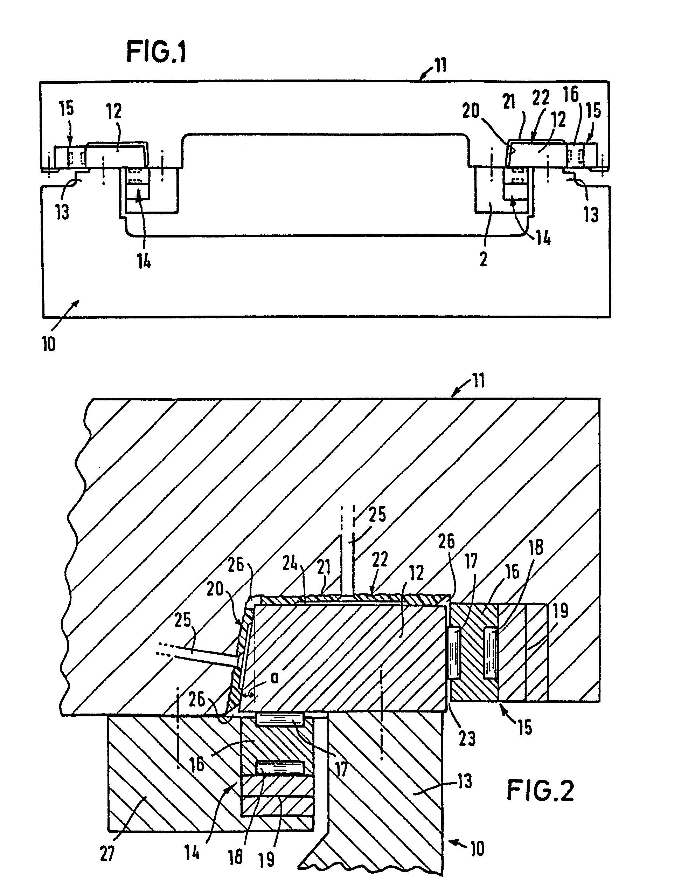

Die beiden übrigen Flächen der Führungsleiste 12, nämlich die nach innen gerichtete Seitenfläche und die Oberseite liegen an Beschichtungen 20 und 21 an, die zwei benachbarte Wände der Aufnahme 22 des Schlittens 11 bilden. Die Beschichtung 20 liegt der Andrückvorrichtung 15 gegenüber und die Beschichtung 21 liegt der Andrückvorrichtung 14 gegenüber. Bevor die Beschichtungen erzeugt worden sind, ist die Aufnahme 22 an dem Schlitten 11 zunächst mit einem Übermaß gegenüber der Führungsleiste 12 hergestellt worden, wobei die Wände der Aufnahme 22 absichtlich rauh gestaltet worden sind, mit einer Rauhtiefe von z.B. 0,5 mm. Anschließend wird dann die Führungsleiste 12 in der Aufnahme 22 des Schlittens 11 positioniert. Hierbei ist die Führungsleiste 12 mit dem Grundkörper 10 fest verbunden und der Schlitten 11 wird von einer (nicht dargestellten) Positioniervorrichtung in definierter Weise festgehalten. Die Zwischenräume, die einerseits von den Wänden der Aufnahme 22 und andererseits von der inneren Seitenwand und der Oberseite der Führungsschiene 12 begrenzt werden, werden mit Kunststoff ausgespritzt, so daß die Beschichtungen 20 und 21 entstehen. Um anschließend den Schlitten 11 von den Führungsschienen 12 abziehen zu können, sind die inneren Seitenwände der Aufnahme 22 und der Führungsschiene 12 mit einer Keilschräge versehen, d.h. diese Flächen verlaufen nicht parallel zu der Außenseite 23 der Führungsleiste 12, sondern unter einem Winkel a von etwa 4°. Dieser Winkel ist in Fig. 2 aus Gründen der Verdeutlichung größer eingezeichnet. Die Aufnahme 22 hat also an der dem Grundkörper 10 zugewandten Öffnungsseite eine größere Breite als an ihrer (oberen) Basisfläche.

Nachdem die Beschichtungen 20 und 21 erhärtet sind, wird der Schlitten 11 von den Führungsleisten 12 abgenommen und bei einer Nachbearbeitung werden Schmiermittelnuten 24 in die Beschichtungen 20 und 21 eingearbeitet. Außerdem sind Schmiermittelkanäle 25 vorhanden, um Schmiermittel an die zu schmierenden Flächen heranzuführen.

Wie aus Fig. 2 ersichtlich ist, sind die Kanten der Führungsschiene 12 von den Beschichtungen 20 und 21 freigehalten, um die Entstehung von Zwickeln und klemmenden Keilen zu vermeiden. Zu diesem Zweck sind in die betreffenden Bereiche 26 während des Ausspritzens Schnüre oder andere Freihalteelemente eingesetzt worden, die nach dem Herstellen der Beschichtungen wieder entfernt worden sind.

Wie aus Fig. 2 ersichtlich ist, ist die untere Andrückvorrichtung 14 von einem unteren Lagerbock 27 abgestützt, der an der Unterseite des Schlittens 11 befestigt ist. Die Andrückvorrichtung 14 verhindert das Abheben des Schlittens von der Führungsschiene 12. Sie ist in der Nähe der Beschichtung 20 angebracht und drückt die Führungsleiste gegen die gegenüberliegende Beschichtung 21. Durch diese Anordnung der unteren Andrückvorrichtung 14 wird erreicht, daß die entstehenden Kippmomente kleingehalten werden und daß der Schlitten 11 mit seinen Beschichtungen 20 und 21 satt gegen die beiden Führungsflächen der Leisten 12 gedrückt werden.

Ein besonderer Vorteil des Schlittenführungssystems besteht in der starren Führung. Da zwischen den Führungsleisten 12 und dem Schlitten 11 nur wenig Stoßstellen vorhanden sind, an denen Materialien gegeneinanderstoßen, ist eine hohe Steifigkeit gewährleistet. Bekanntlich verursachen Stoßflächen immer eine gewisse Elastizität.

**Patentansprüche**

1. Schlittenführungssystem mit einem Grundkörper (10), der parallele Führungsleisten (12) trägt, und einem auf den Führungsleisten (12) verschiebbaren Schlitten (11) mit je einer Aufnahme (22) für jede Führungsleiste, wobei mindestens eine Seitenfläche der Aufnahme (22) mit Kunststoff beschichtet ist, dadurch gekennzeichnet, daß die Aufnahme (22) an der dem Grundkörper (10) zugewandten Öffnungsseite eine größere Breite hat als an ihrer Basis und daß die Außenfläche der Beschichtung (20) und die daran anliegende Seitenfläche der Führungsleiste (12) eine Keilschräge aufweisen, deren Winkel (a) maximal 10°, vorzugsweise maximal 5°, beträgt.

2. Schlittenführungssystem nach Anspruch 1, dadurch gekennzeichnet, daß nur eine der Seitenflächen der Aufnahme (22) eine Beschichtung (20) trägt und daß die andere Seitenfläche von der Gleitfläche einer justierbaren Andrückvorrichtung (15) gebildet ist.

3. Schlittenführungssystem nach Anspruch 1 oder 2, dadurch gekennzeichnet, daß auch die Basisfläche der Aufnahme (22) eine Beschichtung (21) trägt.

4. Schlittenführungssystem nach einem der Ansprüche 1 bis 3, dadurch gekennzeichnet, daß jede Beschichtung (20, 21) an ihrer Außenfläche Schmiermittelnuten (24) aufweist.

5. Schlittenführungssystem nach Anspruch 3 oder 4, dadurch gekennzeichnet, daß die Führungsleiste (12) mit einer Untergrifffläche ausgebildet ist und daß hieran eine justierbare Andrückvorrichtung (14) des Schlittens (11) angreift.

6. Schlittenführungssystem nach Anspruch 5, dadurch gekennzeichnet, daß die auf einer Konsole (13) des Grundkörpers (10) befestigte Führungsleiste (12) zur Längsmittelebene des Grundkörpers (10) hin über die Konsole (13) übersteht und daß die Andrückvorrichtung (14) in der Nähe der an der Seitenfläche der Aufnahme (22) vorgesehenen Beschichtung (20) angeordnet ist.

7. Schlittenführungssystem nach einem der vorhergehenden Ansprüche, dadurch gekennzeichnet, daß beide Seitenflächen der Aufnahme (22) eine Beschichtung tragen und daß an beiden Seitenflächen Keilschrägen vorgesehen sind.

**Claims**

1. A carriage guide system comprising a basic body (10) carrying parallel guide gibs (12), and a carriage (12) displaceable on the guide gibs (12) and having a corresponding seat (22) for each guide gib, at least one side face of the seat (22) being plastic-coated, characterised in that said seat (22) is wider at the opening facing said basic body (10) than at its base and that the outside of the coating (20) and the adjacent side face of the guide gib (12) have a wedge slope of an angle (a) that is 10° at most, preferably 5° at most.

2. The carriage guide system according to Claim 1, characterised in that only one of the side faces of said seat (22) is provided with a coating (20) and that the other side face is formed by the sliding face of an adjustable pressing means (15).

3. The carriage guide system according to Claim 1 or 2, characterised in that a coating (21) is also provided on the basic surface of said seat (22).

4. The carriage guide system according to one of Claims 1 to 3, characterised in that the outer surface of each coating (20, 21) is provided with lubricant grooves (24).

5. The carriage guide system according to Claim 3 or 4, characterised in that said guide gib (12) is provided with a face of underengagement and that an adjustable pressing means (14) of the carriage (11) engages thereon.

6. The carriage guide system according to Claim 5, characterised in that said guide gib (12) fixed to a support (13) of said basic body (10) projects beyond said support (13) towards the longitudinal central plane of said basic body (10) and that the pressing means (14) is arranged near the coating (20) provided on the side face of said seat (22).

7. The carriage guide system according to any one of the preceding claims, characterised in that both side faces of said seat (22) are provided with a coating and that said two side faces are provided with wedge slopes.

**Revendications**

1. Système de guidage de chariot comportant un corps de base (10), qui porte des glissières parallèles de guidage (12), ainsi qu'un chariot (11) qui peut coulisser sur les glissières de guidage (12) et présente respectivement un réceptace (22) pour chaque glissière de guidage, étant précisé qu'au moins une surface latérale du réceptacle (22) est revêtue de matière plastique, caractérisé en ce que le réceptacle (22) a une plus grande largeur sur sa face d'ouverture, côté du corps de base (10), que sur sa base; et en ce que la surface extérieure du revêtement (20) et la surface latérale de la glissière de guidage (12) qui s'y appuie présentent une dépouille dont l'angle (a) atteint au maximum 10°, de préférence au maximum 5°.

2. Système de guidage de chariot selon la revendication 1, caractérisé en ce qu'une seule des surfaces latérales du réceptacle (22) porte un revêtement (20); et en ce que l'autre surface latérale est formée par la surface de glissement d'un dispositif de poussée réglable (15).

3. Système de guidage de chariot selon la revendication 1 ou 2, caractérisé en ce que la surface de base du réceptacle (22) porte également un revêtement (21).

4. Système de guidage de chariot selon l'une des revendications 1 à 3, caractérisé en ce que chaque revêtement (20, 21) présente sur sa surface extérieure des rainures de graissage (24).

5. Système de guidage de chariot selon la revendication 3 ou 4, caractérisé en ce que la glissière de guidage (12) comporte une surface de prise par-dessous; et en ce que sur cette surface agit un dispositif de poussée réglable (14) du chariot (11).

6. Système de guidage de chariot selon la revendication 5, caractérisé en ce que la glissière de guidage (12), fixée sur une console (13) du corps de base (10), déborde au-delà de la console (13) en direction du plan médian longitudinal du corps de base (10); et en ce que le dispositif de poussée (14) est disposé au voisinage du revêtement (20) prévu sur la surface latérale de réceptacle (22).

7. Système de guidage de chariot selon l'une des revendications précédentes, caractérisé en ce que les deux surfaces latérales de réceptacle (22) portent un revêtement; et en ce que des dépouilles sont prévues sur les deux surfaces latérales.

## FIG.1

## FIG.2